# EUROPEAN PATENT SPECIFICATION

(11) **EP 2 881 669 B1**
(45) Date of publication and mention of the grant of the patent: **05.06.2019**
(21) Application number: 13826307.4
(22) Date of filing: 25.07.2013
(51) Int. Cl.: F24C 7/02, H05B 6/64, A21B 3/04

(54) **HEATING COOKER**
KOCHVORRICHTUNG
DISPOSITIF DE CUISSON

(30) Priority: 03.08.2012 JP 2012172621
(43) Date of publication of application: 10.06.2015
(73) Proprietor: Panasonic Intellectual Property Management Co., Ltd., Osaka-shi, Osaka 540-6207 (JP)
(72) Inventor: AKASHI, Hideko, Osaka-shi, Osaka 540-6207 (JP)
(74) Representative: SSM Sandmair
(86) International application number: PCT/JP2013/004536
(87) International publication number: WO 2014/020872

(56) References cited:
- EP-A1- 1 458 220
- EP-A1- 2 187 130
- EP-A2- 2 417 883
- GB-A- 2 068 182
- JP-A- 2004 100 987
- JP-A- 2007 010 161
- JP-A- 2007 010 161
- JP-A- 2009 041 819
- JP-A- 2011 163 696
- JP-B2- 4 472 412

## Description

### Technical Field

The present invention relates to a heating cooker having a steam generating unit to generate steam that is supplied to a heating chamber.

### Background Art

In a heating cooker for cooking an object to be heated such as, for example, a food placed in a heating chamber, the use of steam heating as well as high-frequency heating or heater heating is known as a heating means, and as such, the kind of heating means used in the heating cooker is diversified.

In recent years, heating cookers with the use of steam heating as the heating means are particularly increasing. For example, during cooking by grilling fish or roasting meats or vegetables, heating with the use of superheated steam (superheated water vapor) having a steam temperature of 100°C or more is performed (see, for example, Patent Document 1).

### Patent Document 1: JP 11-141881 A

EP 1 458 220 A1 discloses a high frequency heating apparatus having a high frequency generating portion and a steam generating portion for generating steam into a heating chamber for accommodating a thing to be heated and serving to supply at least one of a high frequency and steam into the heating chamber, thereby heating the thing to heated, including a pan which serves to mount the thing to be heated thereon and is provided to be upward removable apart from a bottom face of the heating chamber at a predetermined interval, thereby dividing the space in the heating chamber, steam delivery means for supplying the steam generated by the steam generating portion into the upper space positioned above the pan, and preheating means for raising the temperature in the heating chamber.

EP 2 187 130 A1 discloses a vapor generation heater generating vapor; and a vapor heating heater heating the vapor generated by the vapor generation heater to generate overheated vapor and heating vapor in a heating chamber through circulation, an-article-to-be-heated being cooked by use of vapor fed into the heating chamber. The vapor cooker has: a first cooking step in which the article-to-be-heated is cooked with supply of electric power to the vapor generation heater being larger than that to the vapor heating heater; and a second cooking step in which the article-to-be-heated is cooked with supply of electric power to the vapor generation heater being smaller than that to the vapor heating heater. When the temperature of the article-to-be-heated exceeds the fat melting temperature zone but is less than or equal to 100 DEG C, the first cooking step is switched to the second cooking step.

GB 2 068 182 A discloses a magnetron and a steam generator heater which are alternately and periodically energized by energizing a motor of a variable power controller, and the microwave and steam outputs are controlled in a correlative fashion by varying the ratio of the periods of energization of the magnetron and steam generator. A select switch is operable to switch to a mode in which only the magnetron is energised and to a further mode in which only the steam generator heater is energised.

### Summary of the Invention

### Problems to be solved by the Invention

In a conventional heating cooker, however, when a food is cooked by grilling or roasting it with the use of only a heater, it is often the case that the internal temperature of a thick food (an object to be heated) is difficult to increase, though an outer side of the object to be heated reaches a high temperature. Also, superheated steam heating rather than heater heating can improve cooking of an inner side of the object to be heated, but the former often faces the problem that a surface of the object to be heated is unlikely to be lightly browned.

The present invention has been developed in view of the above-described problems and is intended to provide a heating cooker that heats an object to be heated using steam and can improve both the texture and physical appearance of a grilled or roasted food. Means to Solve the Problems

A heating cooker embodying the present invention is defined in claim 1 and comprises: a heating chamber for accommodating an object to be heated therein; multiple pairs of supports formed on or with opposite side walls of the heating chamber to support a tray on which the object to be heated is placed; a water storage tank which stores water therein that is used to generate steam; a steam generating unit provided with a steam heating heater; a water pump which sends the water in the water storage tank to the steam generating unit through a water-supply pipe conduit; a steam outlet formed in a wall of the heating chamber, so that the steam generated by the steam generating unit is ejected into the heating chamber through the steam outlet and blown onto the object to be heated; a control unit operable to control the steam generating unit; wherein the steam outlet is positioned on an upper side of uppermost supports, and the control unit energizes the steam heating heater from the start of cooking to supply steam generated by the steam generating unit to the heating chamber through the steam outlet to thereby heat the object to be heated with the steam; the steam outlet is formed in one of the side walls of the heating chamber; a tubular grill heater is mounted on an upper surface of the heating chamber to heat the object to be heated from above by radiant heat; the control unit is operable to control the grill heater, and simultaneously energizes the steam heating heater and the grill heater from the start of cooking, and a surface of the object to be heated is simultaneously grilled or roasted by radiant heat from the grill heater; wherein the control unit controls the amount of energization of the steam generating unit so as to be greater than the amount of energization of the grill heater for a predetermined period of time from the start of cooking and also controls, after a lapse of the predetermined period of time, the amount of energization of the grill heater so as to be greater than the amount of energization of the steam generating unit

### Effects of the Invention

The heating cooker according to the present invention for heating an object to be heated using steam can improve both the texture and physical appearance of a grilled or roasted food.

### Brief Description of the Drawings

Fig. 1 is a front elevational view of a heating cooker according to an embodiment of the present invention with a door opened.
Fig. 2 is a basic motion explanatory view of the heating cooker according to the embodiment.
Fig. 3 is a block diagram of a control system of the heating cooker according to the embodiment.
Fig. 4 is a front elevational view of the heating cooker according to the present invention, when an object to be heated is being cooked by heating with the use of "grill heater + steam heating heater".
Fig. 5 is a view showing an example of a cooking pattern that is performed by "grill heater + steam heating heater" of the heating cooker according to the embodiment.
Fig. 6 is a view showing an example of a cooking pattern that is performed by "grill heater + steam heating heater + high-frequency heating" of the heating cooker according to the embodiment.
Fig. 7 is a view showing an example of a cooking pattern in which high-frequency heating is combined in synchronization with an off-operation of "grill heater + steam heating heater" of the heating cooker according to the embodiment.
Fig. 8 is a table indicating comparison results between the burnt color of the object to be heated and the texture inside the object to be heated when heating was performed only by the grill heater (comparative example 1), when superheated steam heating was performed (comparative example 2), and when heater heating and steam heating were simultaneously performed (embodiment).

### Embodiments for Carrying out the Invention

A heating cooker according to the embodiment comprises: a heating chamber for accommodating an object to be heated therein; a steam generating unit which supplies the heating chamber with steam; and a grill heater mounted on an upper surface of the heating chamber to heat the objet to be heated from above by radiant heat; wherein steam generated by the steam generating unit is supplied to the heating chamber to heat the object to be heated and a surface of the object to be heated is simultaneously grilled or roasted by radiant heat from the grill heater.

According to this configuration, in grilling or roasting an object to be heated, it can be heated with steam and, at the same time, the surface thereof can be browned by radiant heat from the grill heater. As a result, the inside of the object to be heated is cooked through and moist by steam heat and the surface of the object to be heated is lightly browned, thus making it possible to enhance both the texture and physical appearance of a grilled or roasted food.

Also, because the object to be heated is heated by the radiant heat, for example, protein in the surface of the object to be heated is rapidly heated and coagulated, thereby making it possible to prevent tasty components from flowing outwardly from the inside of the object to be heated that has been cooked through by steam heat.

As just described, in grilling or roasting an object to be heated, not only can the inside thereof be cooked through and moist by steam heat, but the surface thereof can be also lightly browned.

The heating cooker according to the embodiment further comprises a control unit operable to control an amount of heating of the steam from the steam generating unit and an amount of heating of the radiant heat from the grill heater, wherein the control unit controls the amount of heating of the steam generating unit so as to be greater than the amount of heating of the grill heater for a predetermined period of time from the start of cooking and also controls, after a lapse of the predetermined period of time, the amount of heating of the grill heater so as to be greater than the amount of heating of the steam generating unit.

By this configuration, while increasing the temperature inside the object to be heated mainly by steam heating for the predetermined period of time from the start of cooking, protein in the surface of the object to be heated is rapidly heated and coagulated by radiant heat from the grill heater, thereby making it possible to prevent tasty components from flowing outwardly. After a lapse of the predetermined period of time, the main heat sources are gradually changed from the steam heating to the heating by the grill heater and, in the latter half of cooking, the radiant heat by the grill heater is increased while preventing drying of the whole object to be heated by the steam heating, thereby making it possible to finish the object to be heated until lightly browned on the surface. Accordingly, it becomes possible to provide a cooked food that is excellent in both physical appearance and texture.

In the heating cooker according to the embodiment, a further embodiment comprises a circulation fan which stirs air inside the heating chamber and a control unit for driving the circulation fan, wherein the control unit drives the circulation fan, when the steam generating unit supplies the heating chamber with steam, to stir the air inside the heating chamber to thereby reduce a temperature of an atmosphere inside the heating chamber containing the steam supplied from the steam generating unit.

This configuration can control to reduce the temperature of the atmosphere inside the heating chamber to which the steam is supplied, thus making it possible to perform steam heating at a low temperature depending on the characteristics of the object to be heated.

For example, if the object to be heated is a fishery product, the inside thereof can be finished so as to be moister by heating it with steam at a low temperature while grilling an upper surface thereof by radiant heat from the grill heater. Also, if green goods, mushrooms or the like are heated for production of roasted vegetables, it becomes possible to maintain the texture and firmness or increase tasty components by heating them with steam of a low temperature as compared with only heater heating or superheated steam heating (high-temperature steam heating) that has been hitherto used.

In the heating cooker according to any one of the embodiments, a further embodiment further comprises a separate heating portion from the steam generating unit and the grill heater, wherein the heating portion increases a temperature of an atmosphere inside the heating chamber containing the steam supplied from the steam generating unit.

This configuration can reduce condensation of the steam supplied from the steam generating unit by increasing the temperature of the atmosphere inside the heating chamber. Also, the temperature of the atmosphere inside the heating chamber can be maintained above a desired temperature.

In the heating cooker according to any one of the embodiments, a further embodiment further comprises a high-frequency generating unit which supplies the heating chamber with high-frequency waves, a vertical partition plate disposed removably at a predetermined distance above a bottom surface of the heating chamber to partition a space inside the heating chamber into an upper space and a lower space, and a heating element mounted on the vertical partition plate to generate heat by the high-frequency waves supplied from the high-frequency generating unit, wherein the high-frequency waves supplied from the high-frequency generating unit heat the heating element to thereby heat a bottom surface of the object to be heated placed on the vertical partition plate.

By this configuration, in addition to the heating by the grill heater from above, a bottom surface of the object to be heated is heated by high-frequency waves supplied from the high-frequency generating unit, thus making it possible to heat the object to be heated from both upper and lower sides. Because of this, protein contained in the surface of the object to be heated can be rapidly heated and coagulated, thereby making it possible to prevent tasty components from flowing outwardly.

In the heating cooker according to the previous embodiment, a further embodiment further comprises an inverter power source which varies an output of the high-frequency generating unit, and a control unit operable to control an on-off operation of the steam generating unit or the grill heater and an output varying operation of the inverter power source, wherein the control unit controls the steam generating unit or the grill heater to heat the object to be heated while turning the steam generating unit or the grill heater on or off and also controls the output varying operation of the inverter power source to allow the high-frequency generating unit to generate the high-frequency waves in synchronization with an off-operation of the steam generating unit or the grill heater so that the high-frequency waves are supplied within a range which does not exceed a rated power of the heating cooker.

This configuration can heat the object to be heated by combining steam heating, grill heater heating and high-frequency heating within a range which does not exceed a rated power of the heating cooker, thereby making it possible to efficiently heat the object to be heated in a short amount of time.

An embodiment of the present invention is described hereinafter with reference to the drawings, but the present invention is not limited by this embodiment.

### (Embodiment)

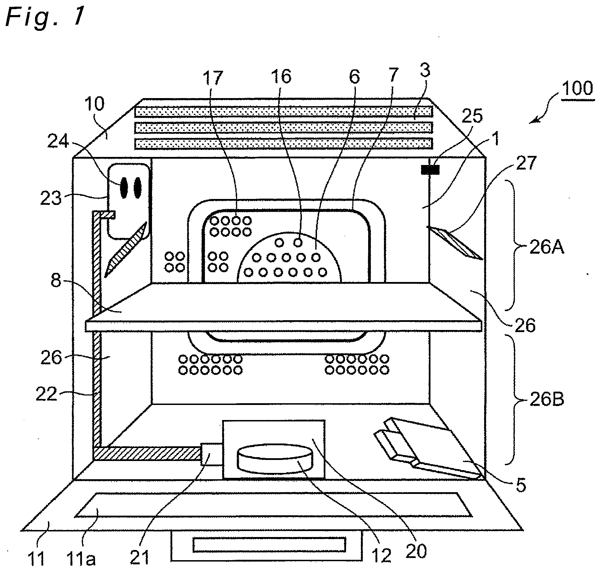

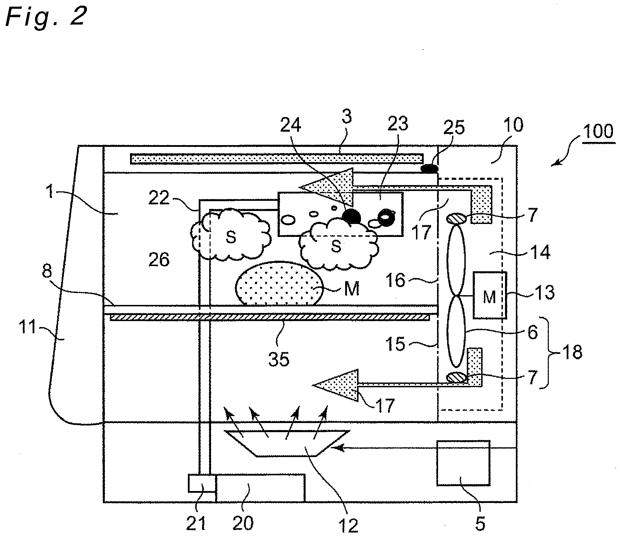

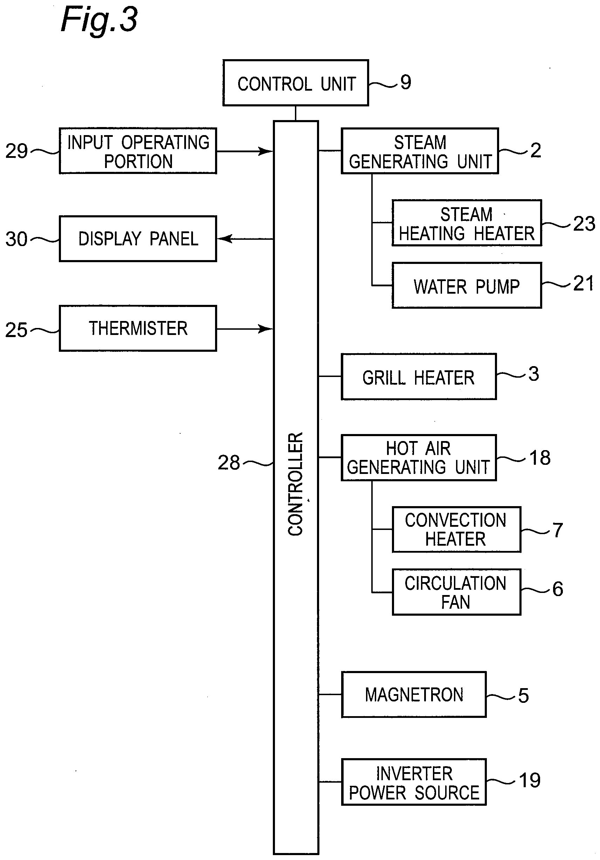

Fig. 1 is a front elevational view of a heating cooker according to an embodiment of the present invention with a door opened, Fig. 2 is a basic motion explanatory view of the heating cooker according to this embodiment, and Fig. 3 is a block diagram of a control system indicating a main configuration required to control the heating cooker according to this embodiment.

As shown in Fig. 1, Fig. 2 and Fig. 3, the heating cooker 100 according to this embodiment is a heating cooker for heating an abject to be heated M by simultaneously supplying steam S and radiant heat to a heating chamber 1 that accommodates the object to be heated M therein. The heating cooker 100 is provided with a steam generating unit 2, which generates steam S to be supplied to the heating chamber 1, and a grill heater or grill heaters 3 mounted on an upper surface of the heating chamber 1 and employed as a heating portion for heating the object to be heated M by radiant heat from above. The heating cooker 100 is also provided with a magnetron 5 employed as a high-frequency generating unit for generating high-frequency waves to be supplied to the heating chamber 1, a circulation fan 6 for stirring and circulating air within the heating chamber 1, and a convection heater 7 employed as a heating portion for heating the air circulating within the heating chamber 1 and as a separate heating portion from the steam generating unit 2 and the or each grill heater 3. The heating cooker 100 is further provided with a tray 8 employed as a vertical partition plate disposed removably at a predetermined distance above a bottom surface of the heating chamber 1 to vertically partition the heating chamber 1 and with a control unit 9 for controlling the steam generating unit 2, the grill heater 3, the high-frequency generating unit (magnetron 5) and the circulation fan 6.

As shown in Fig. 1 and Fig. 2, the heating chamber 1 is formed within a generally box-shaped body casing 10 that is open on a front surface. A door 11 for opening and closing an opening of the heating chamber 1, through which the object to be heated is taken in and out, is mounted on the front surface of the body casing 10 and provided with a translucent window 11a. The door 11 is, for example, hingedly connected at a lower end thereof to a lower edge of the body casing 10 so as to be opened and closed vertically.

Predetermined insulated spaces are secured in walls of the heating chamber 1, i.e., between inner walls and outer walls of the body casing 10 and loaded with an insulating material as needed.

As shown in Fig. 2, one or a plurality of grill heaters 3 are mounted on the upper surface (an upper portion) of the heating chamber 1 to heat the object to be heated M placed in the heating chamber 1 by radiant heat. The or each grill heater 3 can be energized by the control unit 9 described later (see Fig. 3) within a range which does not exceed an allowable total input current.

As shown in Fig. 2, the magnetron 5 is located in, for example, a lower space of the heating chamber 1 and a stirrer blade 12 (or a rotating antenna or the like) employed as a radio wave stirring portion is provided at a location where high-frequency waves generated by the magnetron 5 are received.

The rotating stirrer blade 12 is irradiated with the high-frequency waves from the magnetron 5 and then stirs them before they are supplied to the heating chamber 1.

The magnetron 5 or the stirrer blade 12 may be provided not just on a bottom portion of the heating chamber 1 but on an upper or side surface of the heating chamber 1.

A circulation fan chamber 14 for accommodating therein the circulation fan 6 and a drive motor 13 for driving it is provided in a rear (back) space of the heating chamber 1. A rear (back) wall of the heating chamber 1 is a rear wall that separates the heating chamber 1 and the circulation fan chamber 14 from each other.

Intake vent holes 16 for allowing air from the heating chamber 1 to be sucked into the circulation fan chamber 14 and blast vent holes 17 for allowing air from the circulation fan chamber 14 to be sent to the heating chamber 1 are formed in the rear wall 15 at separate areas thereof. The intake vent holes 16 and the blast vent holes 17 are formed as a number of punched holes.

A hot air generating unit 18 is provided in the circulation fan chamber 14 to generate hot air from circulating air and made up of the circulation fan 6 and the convection heater 7. The circulation fan 6 is positioned roughly in the center of the rectangular rear wall 15 as viewed from front and the rectangular and annular convection heater 7 is provided in the circulation fan chamber 14 so as to encircle the circulation fan 6.

The intake vent holes 16 formed in the rear wall 15 are positioned in front of the circulation fan 6 and the blast vent holes 17 are positioned along the rectangular and annular convection heater 7.

When the circulation fan 6 is driven, a wind generated thereby flows from a front side of the circulation fan 6 to a rear side where the drive motor 13 is present. As a result, air within the heating chamber 1 passes through the intake vent holes 16 and is sucked into a central positon of the convection heater 7 where the circulation fan 6 is present. The air so sucked is then diffused radially and heated when passing by the convection heater 7 before it is sent as hot air to the heating chamber 1 through the blast vent holes 17.

Accordingly, this flow stirs the air inside the heating chamber 1 and circulates it through the circulation fan chamber 14 so that the air may be heated as a hot wind in the course of such circulation.

A water storage tank 20, a water pump 21 and a water-supply pipe conduit 22 are disposed as component parts for supplying the steam generating unit 2 with water. Water stored in the water storage tank 20 is sent to a steam heating heater 23 of the steam generating unit 2 through the water-supply pipe conduit 22 and subsequently heated by the steam heating heater 23 for generation of steam. The steam so generated is supplied to the heating chamber 1 through steam outlets 24 defined in a side wall of the heating chamber 1. The steam outlets may be provided not just in the side wall of the heating chamber 1 but in an upper wall, a rear wall or a bottom wall of the heating chamber 1.

The grill heater 3 mounted on an upper portion of the heating chamber 1 is a tubular heater for heating a food for grilling (or roasting) or for preheating the heating chamber 1 and, for example, a Milacron heater or an argon heater is used. In place of the tubular heater, a plate heater such as, for example, a mica heater or a sheathed heater can be used as the grill heater 3. A thermistor 25 is provided on a wall surface of the heating chamber 1 to detect the temperature inside the heating chamber 1.

The tray 8 employed as the vertical partition plate is removably supported by a pair of supports 27 formed on or with opposite side walls of the heating chamber 1. Multiple pairs of supports 27 are provided so as to support the tray 8 at any one of a plurality of heights within the heating chamber 1. The heating chamber 1 is partitioned into an upper space 26A and a lower space 26B by supporting the tray 8 on the supports 27.

Fig. 3 is a block diagram showing a main configuration of the control unit 9 of the heating cooker 100. The control unit 9 is mainly composed of a controller 28 having, for example, a microprocessor. The controller 28 communicates signals mainly with an input operating portion 29, a display panel 30, the steam generating unit 2, the grill heater 3, the magnetron 5, the convection heater 7, the circulation fan 6, the thermistor 25 and the like to control such component parts.

The input operating portion 29 is provided with various keys such as, for example, a start switch, a heating method selector switch and an automatic cooking switch. While confirming the display panel 30, a user performs cooking by operating appropriate keys depending on the heating contents.

The operation and function of the heating cooker 100 of the above-described configuration are explained.

As shown in Fig. 2, a food, i.e., an object to be heated M is initially placed on a dish or the tray 8 and inserted into the heating chamber 1, and the door 11 is closed. When various settings such as, for example, the heating method, the heating time and the heating temperature are performed by operating the input operating portion 29 and the start button is subsequently depressed, cooking is automatically performed by the operation of the controller 28.

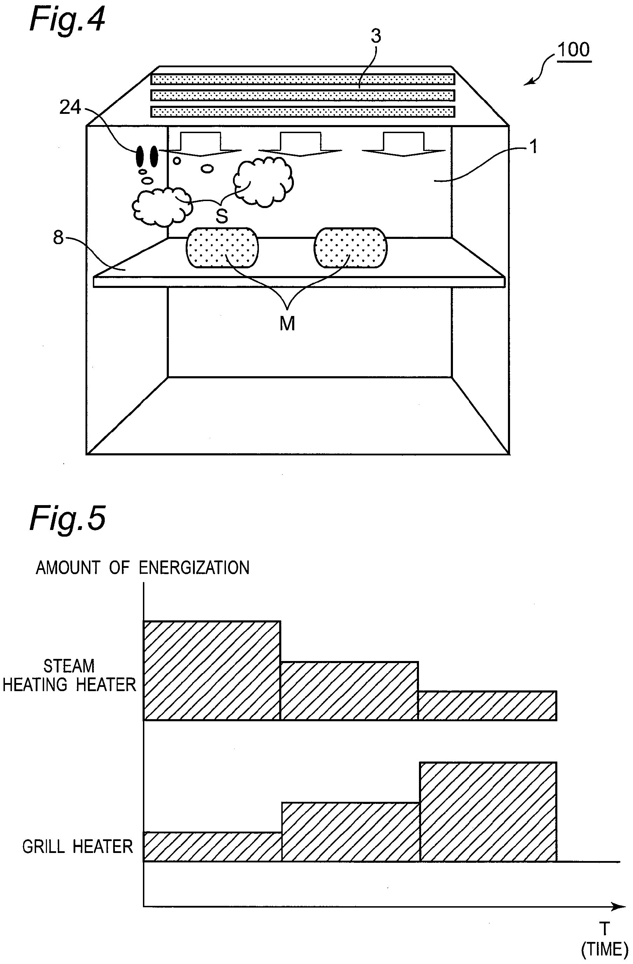

As shown in Fig. 4, when the food or the object to be heated M is heated in a heating mode of "steam generating unit 2 + grill heater 3" using the heating cooker 100, the object to be heated M is placed on the vertical partition plate (tray 8) and heated simultaneously by radiant heat from the upper grill heater 3 and steam ejected from the steam outlets 24.

For example, when a heating mode of "steam generating unit 2 + grill heater 3 energized (turned on)" is selected, the steam heating heater 23 is energized (turned on) to heat water sent to the steam heating heater 23 by the water pump 21 and subsequently generate steam S. The steam S rising from the steam heating heater 23 is ejected into the heating chamber 1 through the steam outlets 24 formed in the side wall of the heating chamber 1 and blown onto the object to be heated M, thereby performing steam heating. At the same time, the grill heater 3 is energized and radiant heat from the grill heater 3 mounted on the upper surface of the heating chamber 1 is applied to the object to be heated M, thereby performing heating by radiant heat.

Fig. 5 depicts an example of a cooking pattern that is performed in a heating mode of "grill heater 3 + steam heating heater 23" of the heating cooker 100 according to this embodiment.

As shown in Fig. 5, when the grill heater 3 and the steam heating heater 23 are simultaneously energized for heating, the amount of energization (amount of heating) of the steam heating heater 23 is set to be greater than the amount of energization (amount of heating) of the grill heater 3 for a predetermined period of time from the start of cooking. After a lapse of the predetermined period of time and, for example, in the latter half of cooking, the amount of energization (amount of heating) of the grill heater 3 is set to be greater than the amount of energization (amount of heating) of the steam heating heater 23. By setting in this way, steam heating is mainly performed to increase the temperature inside the object to be heated M (food) for the predetermined period of time from the start of cooking and, at the same time, radiant heat generated by the grill heater 3 rapidly heats and coagulates protein in the surface of the object to be heated M, thereby making it possible to prevent tasty components from flowing outwardly from the inside of the object to be heated M that is being heated by steam. The main heat sources are then gradually changed from the steam heating to the radiant heating by the grill heater 3 and, in the latter half of the cooking, the radiant heat by the grill heater 3 is increased while preventing drying of the whole object to be heated M by the steam heating, thereby making it possible to finish the object to be heated M until lightly browned on the top. Accordingly, it becomes possible to provide a cooked food that is excellent in both physical appearance and texture.

It is to be noted here that the change in the amount of energization may be performed, for example, by dividing the heater into a plurality of heaters and by changing the number of the heaters that are energized or de-energized (turned on or off). Alternatively, the amount of energization may be changed by an intermittent on-off control.

Also, without allowing the controller 28 of the control unit 9 to energize the convection heater 7, the temperature of an atmosphere within the heating chamber 1 containing steam supplied thereto may be controlled so as to reduce by driving the circulation fan 6, which stirs air within the heating chamber 1, to circulate the air within the heating chamber 1.

Such a control can stir the atmosphere containing steam in the vicinity of the object to be heated M throughout the heating chamber 1 to substantially reduce the temperature of the atmosphere containing the steam in the vicinity of the object to be heated M. This curbs a temperature rise within the object to be heated M, thus making it possible to efficiently set the temperature within the heating chamber 1 to an arbitrary temperature suited for cooking at a temperature not greater than 100°C. For example, the inside of a fishery product can be finished so as to be moister by heating it with steam at a low temperature while grilling an upper surface thereof by the grill heater 3. Also, in cooking green goods, mushrooms or the like by roasting, it becomes possible to maintain the texture and firmness or increase tasty components by heating them with steam of a low temperature in the range of 70-80°C as compared with only heater heating or superheated steam heating that has been hitherto used.

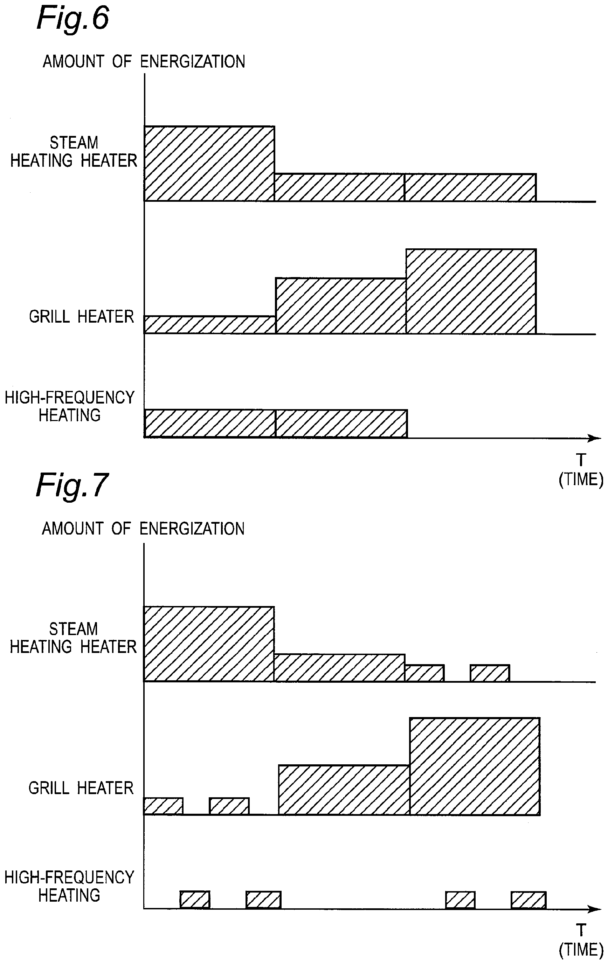

Fig. 6 depicts an example of a cooking pattern that is performed in a heating mode of "steam generating unit 2 + grill heater 3 + high-frequency heating" of the heating cooker 100 according to this embodiment.

As shown in Fig. 6, when high-frequency heating is performed in addition to simultaneous heating of "steam heating + grill heater heating", the stirrer blade 12 is rotated with the magnetron 5 energized (turned on). By doing so, high-frequency waves are uniformly stirred and supplied to the lower space of the heating chamber 1, thereby making it possible to uniformly heat a heating element 35 mounted on a bottom surface of the tray 8. Because this can heat the surface of the object to be heated M from both upper and lower sides of the object to be heated M, protein contained in a bottom surface of the object to be heated M can be also rapidly heated and coagulated, thereby making it possible to effectively prevent tasty components from flowing outwardly.

Fig. 7 depicts an example of a cooking pattern that is performed in a heating mode of "steam generating unit 2 + grill heater 3 + high-frequency heating" of the heating cooker 100 according to this embodiment. In this heating mode, high-frequency heating is combined within a range which does not exceed a rated power of the heating cooker 100 by an inverter power source 19 in synchronization with de-energization (an off-operation) of the grill heater 3 or the steam heating heater 23.

As shown in Fig. 7, the inverter power source 19 for varying an output of high-frequency heating supplies the heating chamber 1 with high-frequency waves within the range which does not exceed the rated power in synchronization with an off-operation of the grill heater 3 or the steam heating heater 23. By doing so, even if the rated power of the heating cooker 100 is low, a bottom surface of a food can be effectively heated by high-frequency heating while performing simultaneous heating of "steam heating + grill heater heating" and, in addition, the cooking time can be reduced.

As just described, the heating cooker 100 can heat an object to be heated M (food) using an optimal heating method for cooking by simultaneously energizing the steam heating heater 23 and the grill heater 3 to grill or roast the object to be heated M and by using heating by the high-frequency generating unit 4 in combination. Also, when steam heating is performed, hot air heating is performed by the convection heater 7 to increase the temperature of an atmosphere inside the heating chamber 1, thereby making it possible to reduce generation of steam condensation.

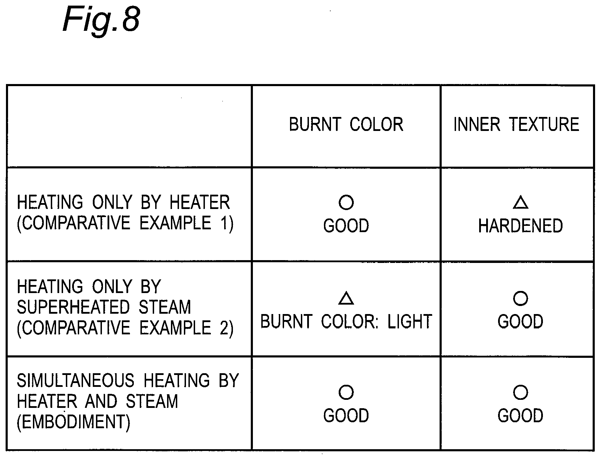

Fig. 8 is a table indicating comparison results between the burnt color of the object to be heated and the texture inside the object to be heated when heating was performed only by the grill heater (radiant heat) (comparative example 1), when only superheated steam heating was performed (comparative example 2), and when heating by the grill heater and steam heating were simultaneously performed (an example in this embodiment).

As shown in Fig. 8, when heating was performed only by the grill heater (comparative example 1), the texture inside the object to be heated was hardened, though the burnt color of the object to be heated became good. When only superheated steam heating was performed (comparative example 2), contrary to the comparative example 1, the burnt color became light, though the texture inside the object to be heated became good. On the other hand, when heating by the grill heater and steam heating were simultaneously performed (the example in this embodiment), good results could be obtained in both burnt color and inner texture of the object to be heated.

As described above, in this embodiment, when an object to be heated M is grilled or roasted, the inside of the object to be heated M can be finished so as to be moist and, at the same time, the object to be heated M can be lightly browned on the upper surface by heating the object to be heated M using steam and simultaneously by browning the upper surface of the object to be heated M by radiant heat from the grill heater 3.

Also, in this embodiment, steam heating is mainly performed to increase the temperature inside the object to be heated M for a predetermined period of time from the start of cooking and, at the same time, radiant heat generated by the grill heater 3 rapidly heats and coagulates protein in the surface of the object to be heated M, thereby making it possible to prevent tasty components from flowing outwardly. Then, the main heat sources are gradually changed from the steam heating to the heating by the grill heater and, in the latter half of the cooking, the radiant heat by the grill heater 3 is increased while preventing drying of the whole object to be heated M by the steam heating, thereby making it possible to finish the object to be heated M until lightly browned on the surface. Accordingly, it becomes possible to provide a cooked food that is excellent in both physical appearance and texture.

Further, in this embodiment, the temperature of an atmosphere in the vicinity of the object to be heated M can be controlled to reduce by causing the circulation fan 6 to stir the atmosphere within the heating chamber 1 containing steam while performing steam heating, thus enabling steam heating at a low temperature.

As a result, the inside of, for example, a fishery product can be finished so as to be moister by heating it with steam at a low temperature while grilling an upper surface thereof by the grill heater 3. Also, in cooking green goods, mushrooms or the like by roasting, it becomes possible to maintain the texture and firmness or increase tasty components by heating them with steam of a low temperature as compared with only heater heating or superheated steam heating that has been hitherto used.

Also, in this embodiment, the convection heater 7 is employed as a heating portion for increasing the temperature of the atmosphere within the heating chamber 1. Accordingly, not only can dew condensation be reduced by steam generated, but the temperature of the atmosphere within the heating chamber 1 can be also maintained above a desired temperature.

Further, in this embodiment, a bottom surface of the object to be heated M is heated by high-frequency waves generated by the magnetron 5 and, hence, the object to be heated M can be heated from both upper and lower sides of the object to be heated M. Because of this, protein contained in the bottom surface of the object to be heated M can be rapidly heated and coagulated, thereby making it possible to effectively prevent tasty components from flowing outwardly.

In this embodiment, because a plurality of heat sources for steam heating, grill heater heating and high-frequency heating can be simultaneously used without exceeding the rated power, the object to be heated M can be efficiently heated in a short amount of time.

Any combination of the various embodiments referred to above can produce respective effects.

Although the present invention has been fully described by way of preferred embodiments with reference to the accompanying drawings, it is to be noted here that various changes and modifications will be apparent to those skilled in the art. Therefore, unless such changes and modifications otherwise depart from the scope of the present invention as set forth in the appended claims, they should be construed as being included therein.

### Industrial Applicability

As described above, in grilling or roasting an object to be heated, the heating cooker according to the present invention can finish the object to be heated in such a way that steam heating allows the inside thereof to be cooked through and moist and, at the same time, the object to be heated can be lightly browned on the upper surface by heating the object to be heated using steam and simultaneously by browning the upper surface of the object to be heated by radiant heat from the grill heater. For this reason, the heating cooker according to the present invention can be effectively used as a cooker.

### Explanation of Reference Numerals

- 1: heating chamber
- 2: steam generating unit
- 3: grill heater
- 5: magnetron (high-frequency generating unit)
- 6: circulation fan
- 7: convection heater (heating portion)
- 8: tray (vertical partition plate)
- 19: inverter power source
- 28: controller
- 35: heating element
- 100: heating cooker
- M: object to be heated
- S: steam

## Claims

1. A heating cooker (100) comprising:
a heating chamber (1) for accommodating an object to be heated therein;
multiple pairs of supports (27) formed on or with opposite side walls of the heating chamber (1) to support a tray (8) on which the object to be heated is placed;
a water storage tank (20) which stores water therein that is used to generate steam;
a steam generating unit (2) provided with a steam heating heater (23);
a water pump (21) which sends the water in the water storage tank (20) to the steam generating unit (2) through a water-supply pipe conduit (22);
a steam outlet (24) formed in a wall of the heating chamber (1), so that the steam generated by the steam generating unit (2) is ejected into the heating chamber (1) through the steam outlet (24) and blown onto the object to be heated;
a control unit (9) operable to control the steam generating unit (2);
wherein the steam outlet (24) is positioned on an upper side of uppermost supports, and the control unit energizes the steam heating heater (23) from the start of cooking to supply steam generated by the steam generating unit (2) to the heating chamber (1) through the steam outlet (24) to thereby heat the object to be heated with the steam;
**characterized in that**:
the steam outlet (24) is formed in one of the side walls of the heating chamber (1);
a tubular grill heater (3) is mounted on an upper surface of the heating chamber (1) to heat the objet to be heated from above by radiant heat;
the control unit (9) is operable to control the grill heater (3), and simultaneously energizes the steam heating heater (23) and the grill heater (3) from the start of cooking, and a surface of the object to be heated is simultaneously grilled or roasted by radiant heat from the grill heater (3);
wherein the control unit (9) controls the amount of energization of the steam generating unit (2) so as to be greater than the amount of energization of the grill heater (3) for a predetermined period of time from the start of cooking and also controls, after a lapse of the predetermined period of time, the amount of energization of the grill heater (3) so as to be greater than the amount of energization of the steam generating unit (2).

2. The heating cooker according to claim 1, further comprising a circulation fan (6) which stirs air inside the heating chamber (1),
wherein the control unit (9) controls and drives the circulation fan (6), when the steam generating unit (2) supplies the heating chamber (1) with steam, to stir the air inside the heating chamber (1) to thereby reduce a temperature of an atmosphere inside the heating chamber (1) containing the steam supplied from the steam generating unit (2).

3. The heating cooker according to any one of claims 1 to 2, further comprising a convection heating portion (7) separate from the steam generating unit (2) and the grill heater (3),
wherein the convection heating portion (7) increases a temperature of an atmosphere inside the heating chamber (1) containing the steam supplied from the steam generating unit (2).

4. The heating cooker according to any one of claims 1 to 3, further comprising:
a high-frequency generating unit (5) which supplies the heating chamber (1) with high-frequency waves,
a tray (8) supported by the supports (27) formed on or with the opposite side walls of the heating chamber (1) to partition a space inside the heating chamber (1) into an upper space and a lower space, and
a heating element (35) mounted on the tray (8) to generate heat by the high-frequency waves supplied from the high-frequency generating unit (5),
wherein the high-frequency waves supplied from the high-frequency generating unit (5) heat the heating element (35) to thereby heat a bottom surface of the object to be heated placed on the tray (8).

5. The heating cooker according to claim 4, further comprising:
an inverter power source (19) which varies an output of the high-frequency generating unit (5),
wherein the control unit (9) controls the steam generating unit (2) or the grill heater (3) to heat the object to be heated while turning the steam generating unit (2) or the grill heater (3) on or off and also controls the output varying operation of the inverter power source (19) to allow the high-frequency generating unit (5) to generate the high-frequency waves in synchronization with an off-operation of the steam generating unit (2) or the grill heater (3) so that the high-frequency waves are supplied within a range which does not exceed a rated power of the heating cooker (100).

## Patentansprüche

1. Heizkocher (100), der Folgendes umfasst:
eine Heizkammer (1) zum Aufnehmen eines darin zu erhitzenden Objekts;
mehrere Paare von Stützen (27), die an oder mit gegenüberliegenden Seitenwänden der Heizkammer (1) ausgebildet sind, um eine Ablage (8) zu stützen, auf der das zu erhitzende Objekt angeordnet ist;
einen Wasservorratsbehälter (20), in dem Wasser gespeichert ist, das zur Erzeugung von Dampf verwendet wird;
eine Dampferzeugungseinheit (2), die mit einem Dampfheizer (23) versehen ist;
eine Wasserpumpe (21), die das Wasser im Wasservorratsbehälter (20) durch eine Wasserzufuhrrohrleitung (22) zur Dampferzeugungseinheit (2) führt;
einen in einer Wand der Heizkammer (1) ausgebildeten Dampfauslass (24), so dass der von der Dampferzeugungseinheit (2) erzeugte Dampf durch den Dampfauslass (24) in die Heizkammer (1) ausgestoßen und auf das zu erhitzende Objekt geblasen wird;
eine Steuereinheit (9), die dafür ausgelegt ist, die Dampferzeugungseinheit (2) zu steuern;
wobei der Dampfauslass (24) auf einer Oberseite der obersten Stützen positioniert ist und die Steuereinheit die Dampfheizheizung (23) vom Beginn des Kochens an speist, um Dampf, der von der Dampferzeugungseinheit (2) erzeugt wird, der Heizkammer (1) durch den Dampfauslass (24) zuzuführen, um dadurch das zu erhitzende Objekt mit dem Dampf zu erwärmen;
**dadurch gekennzeichnet, dass**
der Dampfauslass (24) in einer der Seitenwände der Heizkammer (1) ausgebildet ist;
eine rohrförmige Grillheizung (3) an einer oberen Oberfläche der Heizkammer (1) angebracht ist, um das von oben zu erhitzende Objekt durch Strahlungswärme zu erwärmen;
die Steuereinheit (9) dafür ausgelegt ist, die Grillheizung (3) zu steuern, und gleichzeitig die Dampfheizung (23) und die Grillheizung (3) ab Kochbeginn aktiviert und wobei eine Oberfläche des zu erhitzenden Gegenstands gleichzeitig durch Strahlungswärme des Grillheizers (3) gegrillt oder geröstet wird;
wobei die Steuereinheit (9) den Erregungsbetrag der Dampferzeugungseinheit (2) so steuert, dass er für eine vorbestimmte Zeitspanne ab dem Beginn des Kochens größer ist als der Erregungsbetrag des Grillheizgeräts (3), und auch nach Ablauf der vorbestimmten Zeitdauer den Erregungsbetrag der Grillheizung (3) so steuert, dass er größer ist als der Erregungsbetrag der Dampferzeugungseinheit (2).

2. Heizkocher nach Anspruch 1, der ferner ein Umlaufgebläse (6) umfasst, das Luft innerhalb der Heizkammer (1) bewegt,
wobei die Steuereinheit (9) das Umlaufgebläse (6) steuert und antreibt, wenn die Dampferzeugungseinheit (2) die Heizkammer (1) mit Dampf versorgt, um die Luft innerhalb der Heizkammer (1) zu rühren, um dadurch die Temperatur einer Atmosphäre innerhalb der Heizkammer (1) zu verringern, die den von der Dampferzeugungseinheit (2) zugeführten Dampf enthält.

3. Heizkocher nach einem der Ansprüche 1 bis 2, der ferner einen Konvektionsheizabschnitt (7) umfasst, der von der Dampferzeugungseinheit (2) und dem Grillheizkörper (3) getrennt ist,
wobei der Konvektionsheizabschnitt (7) eine Temperatur einer Atmosphäre innerhalb der Heizkammer (1) erhöht, die den von der Dampferzeugungseinheit (2) zugeführten Dampf enthält.

4. Heizkocher nach einem der Ansprüche 1 bis 3, der ferner Folgendes umfasst:
eine Hochfrequenz-Erzeugungseinheit (5), die die Heizkammer (1) mit Hochfrequenzwellen versorgt,
eine Schale (8), die von den Trägern (27) getragen wird, die an oder mit den gegenüberliegenden Seitenwänden der Heizkammer (1) ausgebildet sind, um einen Raum innerhalb der Heizkammer (1) in einen oberen Raum und einen unteren Raum zu unterteilen, und
ein Heizelement (35), das an der Schale (8) angebracht ist, um Wärme durch die von der Hochfrequenz-Erzeugungseinheit (5) zugeführten Hochfrequenzwellen zu erzeugen,
wobei die von der Hochfrequenz-Erzeugungseinheit (5) zugeführten Hochfrequenzwellen das Heizelement (35) erwärmen, um dadurch eine Bodenfläche des zu erhitzenden Objekts auf der Ablage (8) zu erwärmen.

5. Heizkocher nach Anspruch 4, der ferner Folgendes umfasst:
eine Wechselrichter-Stromquelle (19), die eine Ausgabe der Hochfrequenz-Erzeugungseinheit (5) variiert,
wobei die Steuereinheit (9) die Dampferzeugungseinheit (2) oder die Grillheizung (3) steuert, um das zu erhitzende Objekt zu erwärmen, während sie die Dampferzeugungseinheit (2) oder die Grillheizung (3) ein- oder ausschaltet und auch den variablen Ausgang der Wechselrichter-Stromquelle (19) steuert, um zu ermöglichen, dass die Hochfrequenz-Erzeugungseinheit (5) die Hochfrequenzwellen synchron mit einem Aus-Betrieb der Dampferzeugungseinheit (2) oder der Grillheizung (3) erzeugt, so dass die Hochfrequenzwellen innerhalb eines Bereichs geliefert werden, der eine Nennleistung des Heizkochers (100) nicht überschreitet.

## Revendications

1. Appareil de cuisson à chauffage (100) comprenant :
une chambre de chauffage (1) destinée à loger un objet à chauffer dans celle-ci ;
plusieurs paires de supports (27) formées sur ou avec des parois latérales opposées de la chambre de chauffage (1) pour supporter un plateau (8) sur lequel est placé l'objet à chauffer ;
un réservoir de stockage d'eau (20) qui stocke de l'eau dans celui-ci, qui est utilisée pour générer de la vapeur ;
une unité de génération de vapeur (2) muni d'un appareil de chauffage chauffant la vapeur(23) ;
une pompe à eau (21) qui envoie l'eau dans le réservoir de stockage d'eau (20) vers l'unité de génération de vapeur (2) à travers une conduite d'apport d'eau (22) ;
une sortie de vapeur (24) formée dans une paroi de la chambre de chauffage (1), de sorte que la vapeur générée par l'unité de génération de vapeur (2) soit éjectée dans la chambre de chauffage (1) à travers la sortie de vapeur (24) et soufflée sur l'objet à chauffer ;
une unité de commande (9) capable de fonctionner pour commander l'unité de génération de vapeur (2) ;
la sortie de vapeur (24) étant positionnée sur un côté supérieur des supports les plus hauts, et l'unité de commande énergisant l'appareil de chauffage chauffant la vapeur (23) à partir du début de la cuisson pour apporter de la vapeur générée par l'unité de génération de vapeur (2) à la chambre de chauffage (1) à travers la sortie de vapeur (24) pour ainsi chauffer l'objet à chauffer avec la vapeur ;
**caractérisé en ce que** :
la sortie de vapeur (24) est formée dans l'une des parois latérales de la chambre de chauffage (1) ;
un appareil de chauffage à grill tubulaire (3) est monté sur une surface supérieure de la chambre de chauffage (1) pour chauffer l'objet à chauffer du dessus par chaleur radiante ;
l'unité de commande (9) peut fonctionner pour commander l'appareil de chauffage à grill (3), et énergise simultanément l'appareil de chauffage chauffant la vapeur (23) et l'appareil de chauffage à grill (3) à partir du début de la cuisson, et une surface de l'objet à chauffer est simultanément grillée ou rôtie par la chaleur radiante provenant de l'appareil de chauffage à grill (3) ;
l'unité de commande (9) commandant la quantité d'énergisation de l'unité de génération de vapeur (2) de façon à ce qu'elle soit supérieure à la quantité d'énergisation de l'appareil de chauffage à grill (3) pendant une durée prédéterminée à partir du début de la cuisson et commandant également, après un écoulement de la durée prédéterminée, la quantité d'énergisation de l'appareil de chauffage à grill (3) de façon à ce qu'elle soit supérieure à la quantité d'énergisation de l'unité de génération de vapeur (2).

2. Appareil de cuisson à chauffage selon la revendication 1, comprenant en outre un ventilateur de circulation (6) qui brasse l'air dans la chambre de chauffage (1),
l'unité de commande (9) commandant et entraînant le ventilateur de circulation (6), lorsque l'unité de génération de vapeur (2) alimente la chambre de chauffage (1) en vapeur, pour brasser l'air à l'intérieur de la chambre de chauffage (1) et ainsi réduire une température d'une atmosphère à l'intérieur de la chambre de chauffage (1) contenant la vapeur fournie depuis l'unité de génération de vapeur (2).

3. Appareil de cuisson à chauffage selon l'une quelconque des revendications 1 à 2, comprenant en outre une partie de chauffage à convection (7) séparée de l'unité de génération de vapeur (2) et de l'appareil de chauffage à grill (3),
la partie de chauffage à convection (7) augmentant une température d'une atmosphère à l'intérieur de la chambre de chauffage (1) contenant la vapeur fournie depuis l'unité de génération de vapeur (2).

4. Appareil de cuisson à chauffage selon l'une quelconque des revendications 1 à 3, comprenant en outre :
une unité de génération de haute fréquence (5) qui alimente la chambre de chauffage (1) en ondes haute fréquence,
un plateau (8) supporté par les supports (27) formés que ou avec les parois latérales opposées de la chambre de chauffage (1) pour diviser un espace à l'intérieur de la chambre de chauffage (1) en un espace supérieur et un espace inférieur, et
un élément de chauffage (35) monté sur le plateau (8) pour générer de la chaleur par les ondes haute fréquence fournies depuis l'unité de génération de haute fréquence (5),
les ondes haute fréquence fournies depuis l'unité de génération de haute fréquence (5) chauffant l'élément de chauffage (35) pour ainsi chauffer une surface inférieure de l'objet à chauffé placé sur le plateau (8).

5. Appareil de cuisson à chauffage selon la revendication 4, comprenant en outre :
une alimentation à onduleur (19) qui fait varier une sortie de l'unité de génération de haute fréquence (5),
l'unité de commande (9) commandant l'unité de génération de vapeur (2) pi l'appareil de chauffage à grill (3) pour chauffer l'objet à chauffer tout en mettant l'unité de génération de vapeur (2) ou l'appareil de chauffage à grill (3) en marche ou à l'arrêt et commandant également l'opération de variation de sortie de l'alimentation à onduleur (19) pour permettre à l'unité de génération de haute fréquence (5) de générer les ondes haute fréquence en synchronisation avec une opération d'arrêt de l'unité de génération de vapeur (2) ou de l'appareil de chauffage à grill (3) de sorte que les ondes haute fréquence soient fournies dans une plage qui ne dépasse pas une puissance nominale de l'appareil de cuisson à chauffage (100).
